# FASCICULE DE BREVET EUROPEEN

(11) **EP 4 212 424 B1**
(45) Date de publication et mention de la délivrance du brevet: **17.12.2025**
(21) Numéro de dépôt: 23150962.1
(22) Date de dépôt: 10.01.2023
(51) Int. Cl.: B63B 21/10, B63B 21/50, B63B 21/20

(54) **DISPOSITIF DE CONNEXION MÉCANIQUE, CONÇU POUR LA CONNEXION MÉCANIQUE AMOVIBLE DES EXTRÉMITÉS LIBRES DE DEUX LIGNES OFFSHORE**
MECHANISCHE VERBINDUNGSVORRICHTUNG, DIE ZUR LÖSBAREN MECHANISCHEN VERBINDUNG DER FREIEN ENDEN ZWEIER OFFSHORE-LEITUNGEN KONFIGURIERT IST
MECHANICAL CONNECTION DEVICE DESIGNED FOR THE DETACHABLE MECHANICAL CONNECTION OF THE FREE ENDS OF TWO OFFSHORE LINES

(30) Priorité: 12.01.2022 FR 2200227
(43) Date de publication de la demande: 19.07.2023
(73) Titulaire: NOV - BLM, 44470 Carquefou (FR)
(72) Inventeur: BUSSON, Philippe, 44800 SAINT HERBLAIN (FR)
(74) Mandataire: Jacobacci Coralis Harle

(56) Documents cités:
- EP-B1- 3 475 157
- US-A- 5 366 313
- US-A1- 2009 241 304
- US-A1- 2016 052 604

## Description

### Domaine technique de l'invention

La présente invention concerne le domaine de l'industrie offshore. Elle concerne en particulier les dispositifs de connexion mécanique qui sont conçus pour la connexion mécanique amovible des extrémités libres de deux lignes offshore mises en œuvre par exemple lors de l'ancrage de structures flottantes.

### Etat de la technique

Dans le domaine offshore, des structures flottantes sont classiquement ancrées au sol au moyen de lignes d'ancrage, dites encore « mooring lines », généralement sous la forme de chaînes.

Pour cela, l'extrémité inférieure d'une ligne d'ancrage comporte classiquement des moyens pour sa fixation au sol, par l'intermédiaire d'un massif enfoncé dans le fond marin.

L'extrémité supérieure de cette même ligne d'ancrage est quant à elle avantageusement assemblées à la structure flottante par l'intermédiaire d'un dispositif dénommé couramment « chaumard » qui est généralement implanté sous le niveau de la ligne de flottaison.

La tension appliquée à la ligne d'ancrage est verrouillée par des moyens de blocage en translation équipant le chaumard, par exemple sous la forme d'une mâchoire composée de deux mors articulés autour d'axes de rotation parallèles entre eux.

De manière classique, pour effectuer cette mise en tension, l'extrémité libre d'une ligne messager (dite encore « messenger line ») est connectée temporairement avec l'extrémité libre de la ligne d'ancrage.

Cette ligne messager peut alors être utilisée pour appliquer une traction sur la ligne d'ancrage, jusqu'à obtenir la tension recherchée sur cette dernière.

Un tel couple de lignes est par exemple décrit dans le document US-2016/0052604.

La connexion entre la ligne d'ancrage et la ligne messager doit donc être temporaire, classiquement mise en œuvre par un dispositif de connexion mécanique dédié tenant compte notamment des efforts subis lors de la traction.

Un tel dispositif de connexion mécanique comprend habituellement deux modules qui sont respectivement solidarisés avec l'extrémité libre d'une ligne offshore et qui sont conformés pour une manœuvre relative entre des états assemblé / désassemblé.

Mais, en pratique, les dispositifs de connexion mécanique actuels ne sont pas entièrement satisfaisants.

En effet, une fois la ligne d'ancrage en tension, la déconnexion des modules est souvent particulièrement complexe en raison des conditions d'intervention (parfois sous la ligne de flottaison).

De plus, cette déconnexion nécessite généralement une intervention « humaine » sur le dispositif de connexion mécanique, par exemple par un plongeur ou via un drone sous-marin (ROV).

Ce problème de déconnexion est d'autant plus important, notamment sur le plan du coûts et du temps, lorsque le nombre de déconnexion augmente (par exemple dans le cas de fermes d'éoliennes flottantes, avec des dizaines de modules à désaccoupler).

Il existe donc un besoin d'un dispositif de connexion mécanique dont les modules pourraient être déconnectés sans intervention extérieure, y compris sous la ligne de flottaison.

### Présentation de l'invention

Afin de remédier à l'inconvénient précité de l'état de la technique, la présente invention est celle définie dans la revendication 1 et la revendication 10.

Une telle solution technique permet d'envisager une déconnexion automatique des modules, sans nécessiter une intervention « humaine » sur le dispositif de connexion mécanique.

Comme évoqué précédemment, le gain est significatif (notamment sur le plan du coût, du temps et de la sécurité) lorsque le nombre de déconnexion augmente (par exemple dans le cas de fermes d'éoliennes flottantes avec des dizaines de modules à désaccoupler).

Selon un mode de réalisation préféré, le second module comprend un corps tubulaire comportant deux surfaces cylindriques :
- une surface cylindrique intérieure définissant un logement adapté à recevoir le premier module dans l'état assemblé, et
- une surface cylindrique extérieure le long de laquelle l'organe de manœuvre est guidé selon ledit degré de liberté en translation.

D'autres caractéristiques non limitatives et avantageuses de ce mode de réalisation préféré, prises individuellement ou selon toutes les combinaisons techniquement possibles, sont les suivantes :
- l'organe de manœuvre consiste en une bague comportant une surface cylindrique intérieure, épousant la surface cylindrique extérieure du corps tubulaire pour le guidage en translation, et une surface annulaire aval, avantageusement tronconique, constituant avantageusement une surface d'appui, notamment pour le déplacement depuis la position initiale jusqu'à la position finale et pour l'appui sur des moyens de blocage en translation du chaumard ;
- les moyens de verrouillage comprennent d'une part, sur le second module, au moins un conduit radial, ménagé traversant dans le corps tubulaire, un organe de verrouillage, par exemple au moins une bille, rapporté libre en translation dans ledit au moins un conduit radial pour définir les configurations verrouillée / déverrouillée, et ledit organe de manœuvre comportant une réservation destiné à recevoir l'organe de verrouillage dans la configuration déverrouillée, et d'autre part, sur le premier module, au moins une réservation destinée à recevoir l'organe de verrouillage dans la configuration verrouillée ;
- le premier module comporte un corps tubulaire définissant deux surfaces : une surface cylindrique intérieure destinée à recevoir l'extrémité libre de la première ligne offshore, et une surface cylindrique extérieure épousant, au jeu près, le logement du second module.

D'autres caractéristiques non limitatives et avantageuses du produit conforme à l'invention, prises individuellement ou selon toutes les combinaisons techniquement possibles, sont les suivantes :
- l'organe de manœuvre coopère avec des moyens de maintien déformable, par exemple des rondelles belleville ou un bloc élastomère, destinés à tendre à maintenir ledit organe de manœuvre en position initiale et à être déformés pour générer le déplacement depuis la position initiale jusqu'à la position finale ; le corps tubulaire comporte avantageusement une collerette qui est raccordée à la surface cylindrique extérieure, à distance des moyens d'attache, lesquels moyens de maintien déformable sont avantageusement implantés entre ladite collerette et l'organe de manœuvre ;
- le dispositif de connexion mécanique comprend un troisième module comportant des moyens d'attache avec une extrémité libre de la première ligne offshore ; le troisième module et le second module comportent des moyens de solidarisation amovible additionnels qui sont adaptés à leur connexion mécanique temporaire après désassemblage du premier module et du second module ; les moyens de solidarisation amovible additionnels consistent par exemple en des orifices traversants radiaux qui sont verrouillés par un organe mécanique allongé, par exemple une goupille ou broche ;
- dans l'état assemblé, les modules sont encore reliés par un organe de liaison dégradable qui est destiné à être rompu lors du passage d'un état assemblé à un état désassemblé.

La présente invention concerne encore le couple de lignes offshore, dont les extrémités libres sont assemblées par un dispositif de connexion mécanique selon l'invention.

Les lignes offshore L sont choisies avantageusement parmi une chaine ou un câble.

La présente invention concerne la structure flottante comprenant un chaumard muni de moyens de blocage en translation d'une ligne d'ancrage dans un sens amont vers aval.

Le chaumard est associé à :
- un couple de lignes offshore selon l'invention, ou
- la ligne d'ancrage comportant le second module du dispositif de connexion mécanique selon l'invention, dans l'état désassemblé,
et dans laquelle les moyens de blocage en translation, en position active, sont aptes à bloquer en translation l'organe de manœuvre dans le sens amont vers aval et, le cas échéant, à générer une manœuvre en translation de l'organe de manœuvre depuis la position initiale jusqu'à sa position finale.

Encore selon l'invention, le procédé pour l'ancrage de la structure flottante au moyen de couples de lignes offshore comprend :
- une étape de traction sur la première ligne offshore d'un couple de lignes offshore au travers d'un chaumard, dans un sens aval vers amont, jusqu'au passage du dispositif de connexion mécanique en amont des moyens de blocage en translation,
- une étape de relâchement dudit couple de lignes offshore, dans laquelle les moyens de blocage en translation bloquent l'organe de manœuvre et provoquent une manœuvre dudit organe de manœuvre depuis la position initiale jusqu'à la position finale, conduisant à une configuration déverrouillée des moyens de verrouillage,
- une nouvelle étape de traction sur la première ligne offshore pour sa récupération, le second module étant maintenu au sein du chaumard par lesdits moyens de blocage en translation.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig.1] est une vue générale d'une structure flottante selon l'invention, comportant des chaumards associés chacun à une seconde ligne offshore formant une ligne d'ancrage, dont l'une de ces lignes d'ancrage est en cours de traction au moyen d'une ligne messager ;
[Fig.2] est une vue isolée et agrandie d'un chaumard équipant la structure flottante, traversé par un couple de lignes offshore dont les extrémités libres sont assemblées par un dispositif de connexion mécanique selon l'invention ;
[Fig.3] est une vue isolée et agrandie d'un dispositif de connexion mécanique selon l'invention ;
[Fig.4] est une vue isolée et agrandie, selon un plan de coupe longitudinal, d'un dispositif de connexion mécanique selon l'invention ;
[Fig.5] est une vue partielle et agrandie du chaumard selon la [Fig.2], dans laquelle le dispositif de connexion mécanique traverse les moyens de blocage en translation dans le sens aval vers amont ;
[Fig.6] est une vue partielle et agrandie du chaumard selon la [Fig.2], dans laquelle le dispositif de connexion mécanique vient en appui contre les moyens de blocage en translation ;
[Fig.7] est une vue partielle et agrandie du chaumard selon la [Fig.2], dans laquelle les moyens de blocage en translation, en position active, provoquent un déplacement d'un organe de manœuvre qui manœuvre les modules dans un état désassemblé ;
[Fig.8] est une vue est une vue partielle et agrandie du chaumard selon la [Fig.2], dans laquelle les moyens de blocage en translation, en position active, bloquent en translation un second module du dispositif de connexion mécanique, dans le sens amont vers aval ;
[Fig.9] est une vue partielle et agrandie du chaumard selon la [Fig.2], dans laquelle le second module du dispositif de connexion mécanique est en cours de connexion mécanique temporaire avec un troisième module ;
[Fig.10] est une vue partielle et agrandie du chaumard selon la [Fig.2], dans laquelle le troisième module et le second module sont connectés de sorte à autoriser une manœuvre de la seconde ligne offshore dans un sens amont vers aval.

Il est à noter que, sur ces figures, les éléments structurels et/ou fonctionnels communs aux différentes variantes peuvent présenter les mêmes références.

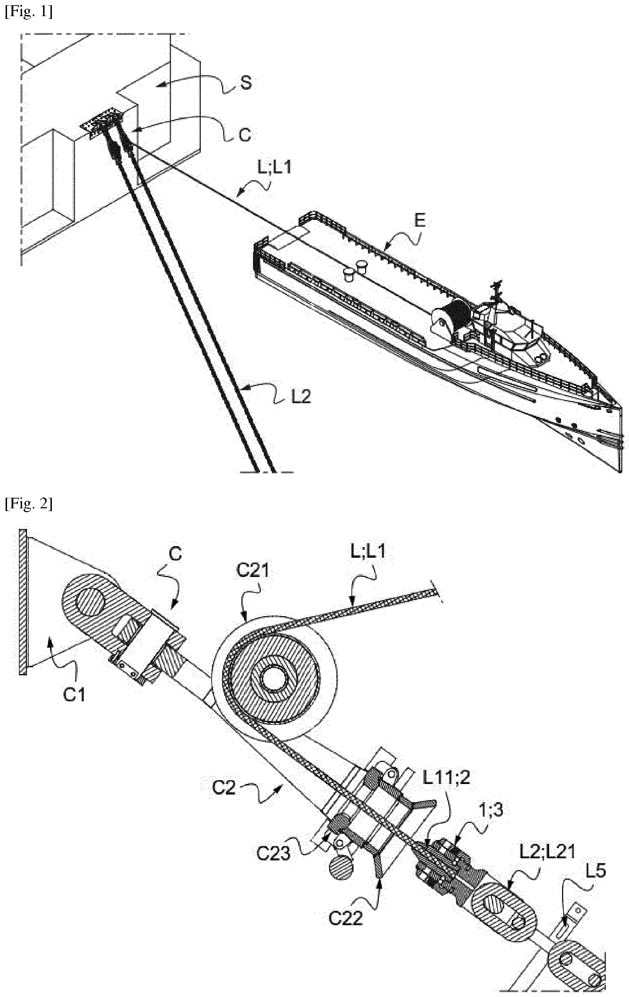

Le dispositif de connexion mécanique 1 selon l'invention, illustré sur les figures 2 et suivantes, est conçu pour la connexion mécanique amovible de deux lignes offshore L.

De manière générale, les lignes offshore L sont choisies avantageusement parmi une chaine ou un câble.

Les lignes offshore L, désignées respectivement par les repères L1, L2, consistent par exemple en :
- une première ligne offshore L1, amont, connue sous le nom de ligne messager L1 ou encore de « messenger line », et
- une seconde ligne offshore L2, aval, connue sous le nom de ligne d'ancrage L2 ou encore de « mooring line ».

Les termes « amont » et « aval » correspondent avantageusement à une convention tenant compte du point d'ancrage, avec :
- l'aval correspondant à ce point d'ancrage, générale fixe par rapport au fond marin, et
- l'amont correspondant à un point opposé, généralement de traction.

En pratique, de préférence, à l'opposé du dispositif de connexion mécanique 1, la première ligne offshore L1 est raccordée à un engin de traction E, par exemple un navire de pose, un remorqueur de manutention d'ancre (ou AHTS pour « Anchor Handling Tug Supply »), ou un navire Multicat.

Encore à l'opposé du dispositif de connexion mécanique 1, la seconde ligne offshore L2 est quant à elle avantageusement ancrée dans le fond marin, par exemple au travers d'un massif enfoncé dans le fond marin.

De telles lignes offshore L coopèrent avantageusement avec une structure flottante S décrite par la suite ([Fig.1]), de préférence par l'intermédiaire d'un chaumard C équipant cette structure flottante S ([Fig.2]).

Selon l'invention, tel qu'illustré sur les figures 2 et suivante, le dispositif de connexion mécanique 1 est conçu pour la connexion mécanique amovible des extrémités libres L11, L21 des deux lignes offshore L.

Pour cela, le dispositif de connexion mécanique 1 comprend deux modules 2, 3, avantageusement réalisés en métal :
- un premier module 2 (dit encore « socket »), amont, attaché à l'extrémité libre L11 de la première ligne offshore L1, avantageusement la ligne messager, et
- un second module 3 (dit encore « yoke »), aval, attaché avec l'extrémité libre L21 de la seconde ligne offshore L2, avantageusement la ligne d'ancrage.

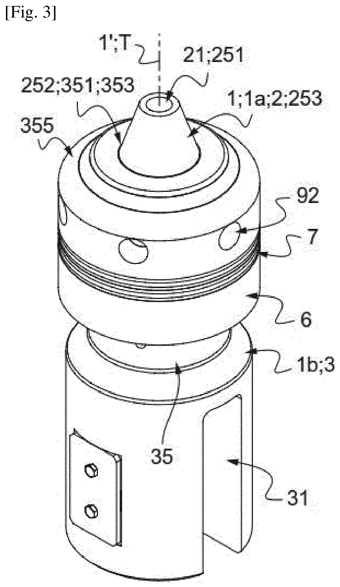

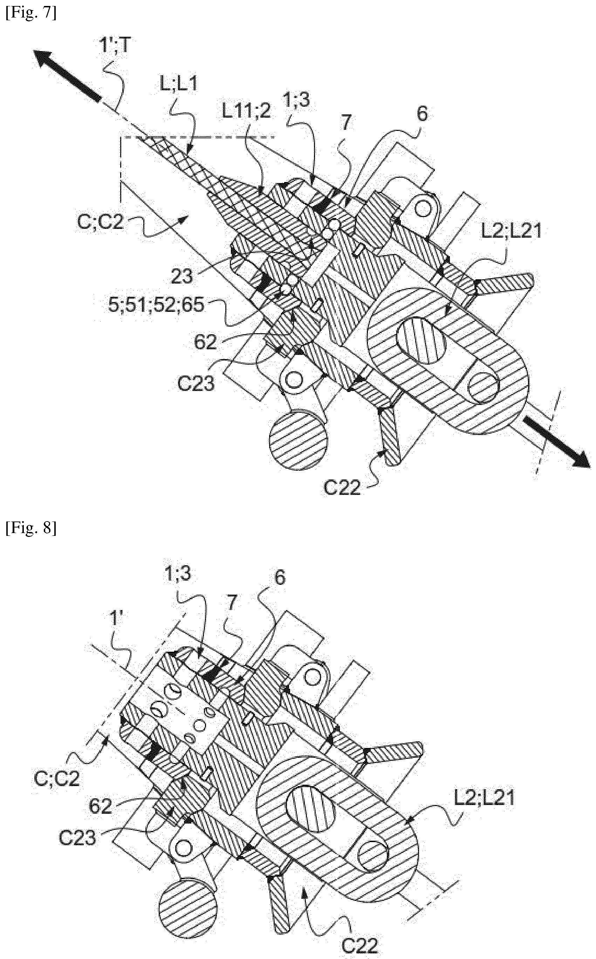

Encore de manière générale, selon l'invention, les modules 2, 3 sont conformés pour une manœuvre relative entre deux états :
- un état assemblé (figures 2 à 6), dans lequel les modules 2, 3 sont assemblés, créant une continuité entre les lignes offshore L assemblées, et
- un état désassemblé (figures 7 et 8), dans laquelle les modules 2, 3 sont séparés l'un par rapport à l'autre,

Dans l'état assemblé, les modules 2, 3 définissent un axe longitudinal 1'. En outre, le premier module 2 définit une extrémité amont 1a et le second module 3 définit une extrémité aval 1b.

Le dispositif de connexion mécanique 1 comprend encore des moyens de verrouillage 5 (entre les deux modules 2, 3) qui présentent deux configurations :
- une configuration verrouillée (figures 2 à 6), dans laquelle les modules 2, 3 sont verrouillés dans l'état assemblé précité, et
- une configuration déverrouillée (figures 7 et 8), dans laquelle les modules 2, 3 sont manœuvrables entre l'état assemblé et l'état désassemblé précités.

Les moyens de verrouillage 5 comportent un organe de manœuvre 6 (appelé ici également « drawer »), pour manœuvrer les moyens de verrouillage 5 depuis la configuration verrouillée jusqu'à la configuration déverrouillée,

Et selon l'invention, l'organe de manœuvre 6 est mobile entre deux positions selon un degré de liberté en translation T parallèle à l'axe longitudinal 1' des modules 2, 3 en état assemblé, de préférence dans un sens aval vers amont, à savoir :
- une position initiale (figures 2 à 6), de préférence du côté de l'extrémité aval 1b du dispositif de connexion mécanique 1, dans laquelle les moyens de verrouillage 5 sont dans la configuration verrouillée, et
- une position finale (figures 7 et 8), de préférence du côté de l'extrémité amont 1a du dispositif de connexion mécanique 1, dans laquelle les moyens de verrouillage 5 sont dans la configuration déverrouillée.

Tel que développé par la suite, un tel organe de manœuvre 6 a l'intérêt de pouvoir être manœuvré automatiquement, avantageusement au sein du chaumard C traversé par les lignes offshore L.

### Premier module

Le premier module 2, amont, comporte des moyens d'attache 21 avec l'extrémité libre L11 de la première ligne offshore L1.

En l'espèce, ces moyens d'attache 21 consistent par exemple en un conduit cylindrique 21 destiné à recevoir l'extrémité libre L11 de la première ligne offshore L1 sous la forme d'un câble.

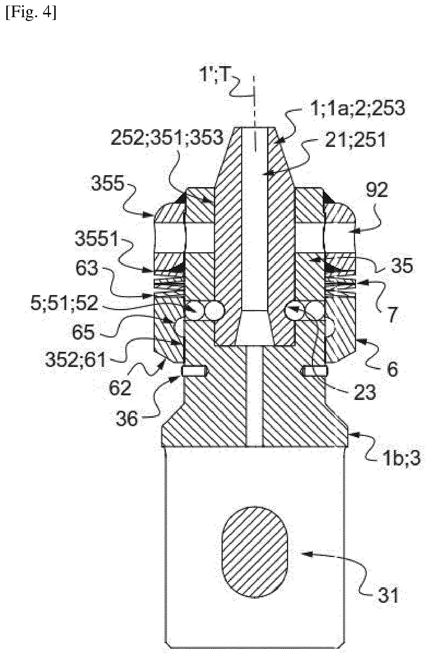

Selon un mode de réalisation illustré sur la [Fig.4], le premier module 2 comporte un corps tubulaire 2 (désigné par le même repère dans un souci de simplicité) comportant deux surfaces cylindriques 251, 252 :
- une surface cylindrique intérieure 251 définissant le conduit cylindrique 21 destiné à recevoir l'extrémité libre L11 de la première ligne offshore L1, et
- une surface cylindrique extérieure 252 destinée ici à se loger au sein du second module 3 et à épouser, au jeu près, un logement de ce second module 3.

Les surfaces cylindriques 251, 252 sont avantageusement coaxiales par rapport à l'axe longitudinal 1'.

La surface cylindrique extérieure 252 se termine avantageusement par une portion tronconique amont 253 (convergeant de l'aval vers l'amont), de sorte à faciliter son cheminement au sein du chaumard C dans le sens aval vers amont.

Cette portion tronconique amont 253 est avantageusement saillante par rapport au second module 3, dans l'état assemblé.

### Second module

Le second module 3, aval, comporte des moyens d'attache 31 avec l'extrémité libre L21 de la seconde ligne offshore L2.

En l'espèce, ces moyens d'attache 31 consistent par exemple en un étrier destiné à recevoir l'extrémité libre L21 de la seconde ligne offshore L2 sous la forme d'un maillon de chaîne.

Selon un mode de réalisation illustré sur la [Fig.4], le second module 3 comprend encore un corps tubulaire 35 comportant deux surfaces cylindriques 351, 352 :
- une surface cylindrique intérieure 351 définissant un logement 353 (avantageusement un logement borgne) adapté à recevoir le premier module 2 dans l'état assemblé, et
- une surface cylindrique extérieure 352 le long de laquelle l'organe de manœuvre 6 est guidé selon le degré de liberté en translation T précité.

Les surfaces cylindriques 351, 352 sont avantageusement coaxiales par rapport à l'axe longitudinal 1'.

De préférence, la surface cylindrique intérieure 351 définit un logement 353 dont la section correspond, au jeu près, à la surface cylindrique extérieure 252 du premier module 2.

Le corps tubulaire 35 du second module 3 comporte encore avantageusement une collerette 355 qui est raccordée à la surface cylindrique extérieure 352, à distance des moyens d'attache 31 (du côté amont de la surface cylindrique extérieure 352).

Cette collerette 355 comporte avantageusement une surface annulaire aval 3551 qui est destinée à former ici une butée de fin de course en translation pour l'organe de manœuvre 6 dans la position finale (du côté amont).

La surface cylindrique extérieure 352 comporte encore avantageusement au moins une butée de fin de course en translation aval 36, rapportée ici après le montage de l'organe de manœuvre 6 sur le corps tubulaire 35.

L'organe de manœuvre 6 consiste avantageusement en une bague 6 qui est mobile en translation le long de la surface cylindrique extérieure 352 du corps tubulaire 35 de sorte à définir ses positions initiale et finale.

La bague 6 comporte avantageusement :
- une surface cylindrique intérieure 61, épousant la surface cylindrique extérieure 352 du corps tubulaire 35 pour le guidage en translation,
- une surface annulaire aval 62, et
- une surface annulaire amont 63, venant avantageusement en regard de la surface annulaire aval 3551 de la collerette 355.

La surface annulaire aval 62 est avantageusement tronconique (évasée dans un sens aval vers amont) et constitue avantageusement une surface d'appui, notamment pour le déplacement depuis la position initiale jusqu'à la position finale qui est avantageusement obtenu par un appui sur des moyens de blocage en translation C23 du chaumard C.

De manière générale, le second module 3 comporte avantageusement des orifices traversants radiaux 92, pour le couplage ultérieur de ce second module 3 avec un troisième module 8.

Ces orifices traversants radiaux 92 sont avantageusement ménagés dans le corps tubulaire 35 et, de préférence, dans la collerette 355.

### Moyens de verrouillage

Les moyens de verrouillage 5, prévus pour le verrouillage des modules 2, 3 en état assemblé, sont avantageusement répartis sur les deux modules 2, 3.

D'une part, le second module 3 comprend avantageusement :
- au moins un conduit radial 51, ménagé traversant dans le corps tubulaire 35, entre ses surfaces cylindriques intérieure 351 / extérieure 352,
- un organe de verrouillage 52, par exemple au moins une bille (ici une paire de billes), rapporté libre en translation dans ledit au moins un conduit radial 51 pour définir les configurations verrouillée / déverrouillée, et
- l'organe de manœuvre 6 comportant une réservation 65 « extérieure » qui est destinée, dans la position finale, à recevoir l'organe de verrouillage 52 pour définir la configuration déverrouillée.

La réservation 65 « extérieure » est avantageusement ménagée au sein de la surface cylindrique intérieure 61 de l'organe de manœuvre 6.

Cette réservation 65 présente ici une forme générale de calotte sphérique.

D'autre part, le premier module 2 comprend avantageusement au moins une réservation 23 « intérieure » destinée à recevoir l'organe de verrouillage 52 dans la configuration verrouillée.

La réservation 23 « intérieure » est avantageusement ménagée au sein de la surface cylindrique extérieure 252 de ce premier module 2.

Cette réservation 23 présente ici une forme générale de calotte sphérique.

De manière générale, l'organe de verrouillage 52 présente avantageusement deux positions radiales au sein de son conduit radial 51 :
- une position radiale intérieure ([Fig.4]), dans laquelle il est partiellement maintenu au sein de la réservation 23 du premier module 2 par l'organe de manœuvre 6 dans sa position initiale (venant partiellement en saillie du côté de la surface cylindrique intérieure 351 du second module 3), et
- une position radiale extérieure ([Fig.7]), dans laquelle il est déplacé vers l'extérieur par le premier module 2 et se loge partiellement dans la réservation 65 de l'organe de manœuvre 6 dans sa position finale (venant partiellement en saillie du côté de la surface cylindrique extérieure 352 du second module 3).

En l'espèce, dans la position initiale, la réservation 65 de l'organe de manœuvre 6 est décalée par rapport au son conduit radial 51. Et la surface cylindrique intérieure 61 assure le maintien de l'organe de verrouillage 52 dans sa position radiale intérieure.

Dans la position finale, la réservation 65 de l'organe de manœuvre 6 est en regard de son conduit radial 51 pour recevoir l'organe de verrouillage 52 dans sa position radiale extérieure.

### Moyens de maintien déformable

L'organe de manœuvre 6 coopère avantageusement avec des moyens de maintien déformable 7 qui sont destinés à tendre à maintenir cet organe de manœuvre 6 dans sa position initiale.

Ces moyens de maintien déformable 7 sont en outre destinés à être déformés (en compression) pour autoriser le déplacement de l'organe de manœuvre 6 depuis sa position initiale jusqu'à sa position finale.

En d'autres termes, les moyens de maintien déformable 7 présente deux états :
- un état initial, non compressé, dans lequel l'organe de manœuvre 6 est maintenu dans sa position initiale, et
- un état final, compressé, provoqué par le déplacement de l'organe de manœuvre 6 depuis sa position initiale jusqu'à sa position finale.

Tel que développé par la suite, ces moyens de maintien déformable 7 sont avantageusement structurés pour être déformés (en compression) par l'effort de traction exercé par la seconde ligne offshore L2 assemblée avec le second module 3.

En l'espèce, les moyens de maintien déformable 7 consistent par exemple en une superposition de rondelles belleville. Ces moyens de maintien déformable 7 peuvent également consister en un bloc élastomère.

De manière générale, les moyens de maintien déformable 7 sont avantageusement portés par le second module 3, implantés entre la collerette 355 et l'organe de manœuvre 6.

Ces moyens de maintien déformable 7 sont ici pris en sandwich entre la surface annulaire aval 3551 de la collerette 355 et la surface annulaire amont 63 de la bague 6.

Encore de manière générale, les moyens de maintien déformable 7 se présentent avantageusement sous la forme générale d'une bague ou couronne qui entoure la surface cylindrique extérieure 352 du corps tubulaire 35 et qui est prise en sandwich entre la collerette 355 et la bague 6.

### Troisième module du dispositif de connexion mécanique

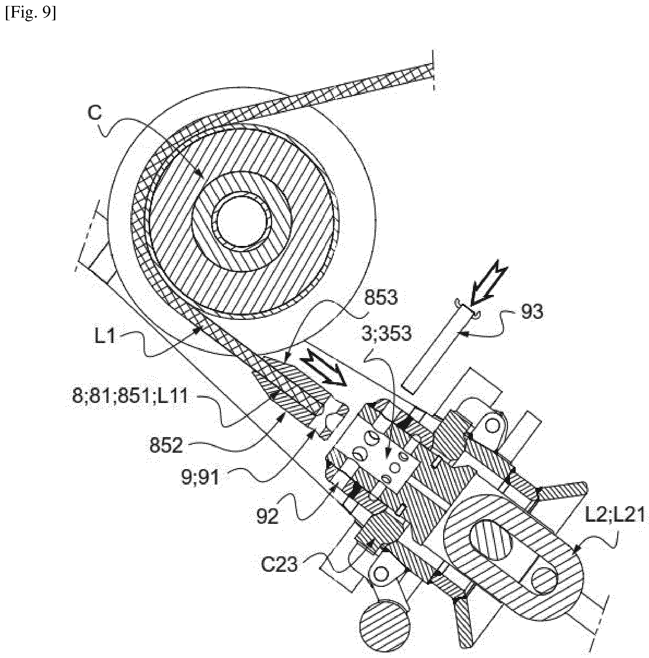

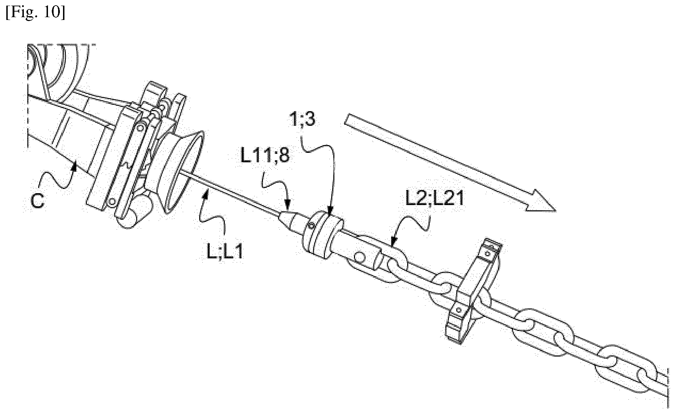

Le dispositif de connexion mécanique 1 comprend encore avantageusement un troisième module 8 qui est destiné à être attaché à une première ligne offshore L1 et qui est destiné à être connecté temporairement au second module 3 de la seconde ligne offshore L2, libre, après séparation du premier module 2 (figures 9 et 10).

Pour cela, de manière générale, le troisième module 8 comporte des moyens d'attache 81 avec l'extrémité libre L11 de la première ligne offshore L1.

Le troisième module 8 et le second module 3 comportent des moyens de solidarisation amovible additionnels 9 qui sont adaptés à leur connexion mécanique temporaire après désassemblage du premier module 2 et du second module 3.

Les moyens de solidarisation amovible additionnels 9 consistent par exemple en des orifices traversants radiaux 91, 92 qui sont ménagés respectivement dans le troisième module 8 et le second module 3.

Les orifices traversants radiaux 91, 92, alignés, sont verrouillés par un organe mécanique allongé 93, par exemple une goupille ou broche.

En l'espèce, le troisième module 8 est similaire au premier module 2.

Les moyens d'attache 81 du troisième module 8 consistent par exemple en un conduit cylindrique 81 destiné à recevoir l'extrémité libre L11 de la première ligne offshore L1 sous la forme d'un câble.

Selon un mode de réalisation illustré, le troisième module 8 comporte un corps tubulaire 8 (désigné par le même repère dans un souci de simplicité) comportant deux surfaces cylindriques 851, 852 :
- une surface cylindrique intérieure 851 définissant le conduit cylindrique 81 destiné à recevoir l'extrémité libre L11 de la première ligne offshore L1, et
- une surface cylindrique extérieure 852 destinée ici à se loger au sein du second module 3 et à épouser le logement 353 du second module 3.

La surface cylindrique extérieure 852 se termine avantageusement par une portion tronconique amont 853, de sorte à faciliter son cheminement au sein du chaumard C dans le sens aval vers amont.

Le corps tubulaire 8 comporte encore, du côté de son extrémité aval, au moins un orifice traversant radial 91 constitutif des moyens de solidarisation amovible additionnels 9.

### Organe de liaison dégradable

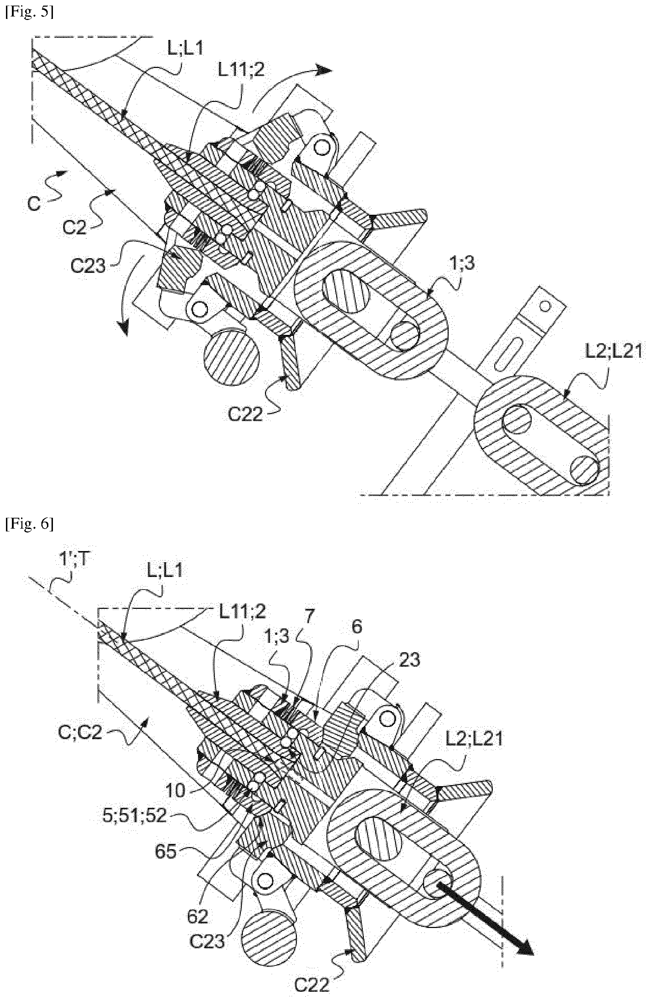

Dans l'état assemblé, le premier module 2 et le second module 3 sont avantageusement reliés encore par un organe de liaison dégradable 10 ([Fig.6]) qui est destiné à être rompu lors du passage d'un état assemblé à un état désassemblé.

Cet organe de liaison dégradable 10 est notamment utile pour retenir temporairement le premier module 2 lors du passage de l'état assemblé à l'état désassemblé, et éviter ainsi un éventuel phénomène de propulsion vers l'amont sur le premier module 2.

Pour cela, l'organe de liaison dégradable 10 consiste par exemple en une pièce de liaison qui est solidarisée avec le premier module 2 et le second module 3. Cette pièce de liaison 10 est destinée à se rompre du fait de l'effort de traction exercé dans des sens inverses sur les lignes offshore L et du mouvement relatif en écartement entre les modules 2, 3.

### Structure flottante

Une structure flottante S selon l'invention comprend un chaumard C muni de moyens de blocage en translation C23 d'une ligne d'ancrage L2 dans un sens amont vers aval.

Une telle structure flottante S consiste par exemple, sans être limitatif, en un flotteur d'éolienne, une unité flottante de production, de stockage et de déchargement (« Floating Production Storage and Offloading » ou FPSO), une unité flottante de stockage et de déchargement (« Floating Storage and Offloading » ou FSO), un semi-submersible, une ferme à poissons flottantes (fishfam), un flotteur de panneau solaire, une bouée, un flotteur houlomoteur.

Un exemple de chaumard C est illustré notamment sur la [Fig.2].

Un chaumard C permet éventuellement de déporter, sous la ligne de flottaison, le point à partir duquel la ligne d'ancrage L2 s'écarte de la structure flottante S. Ce chaumard C assure également le guidage d'un changement de direction de la ligne messager L1.

Le chaumard C comporte avantageusement deux structures :
- une structure amont C1, pour la solidarisation de ce chaumard C avec la structure flottante S, et
- une structure aval C2, libre en rotation autour de deux axes de rotations perpendiculaires (via par exemple un couple d'articulations), qui comporte :
   - - des moyens de renvoi C21, pour guider un changement de direction de la première ligne offshore L1, par exemple une poulie, et
   - - des moyens de guidage C22 (par exemple sous la forme d'un conduit) pour le guidage en translation des lignes offshore L1, L2, qui sont équipés de moyens de blocage en translation C23, pour le blocage en translation de la seconde ligne offshore L2 dans un sens amont vers aval.

Les moyens de blocage en translation C23 consistent par exemple en un dispositif de blocage du type cliquet qui est conçu pour autoriser un cheminement de la seconde ligne offshore L2 dans un sens aval vers amont tout en empêchant un cheminement de cette même seconde ligne offshore L2 dans un sens amont vers aval.

En l'espèce et tel que développé par la suite, les moyens de blocage en translation C23 sont conçu ici pour autoriser un cheminement du dispositif de connexion mécanique 1 dans un sens aval vers amont tout en empêchant un cheminement de ce même dispositif de connexion mécanique 1 dans un sens amont vers aval.

Les moyens de blocage en translation C23 consiste en l'espèce en une mâchoire composée de deux mors articulés autour d'axes de rotation parallèles entre eux.

En pratique, le chaumard C est destiné à être associé à :
- un couple de lignes offshore L selon l'invention ([Fig.2]), raccordés par le dispositif de connexion mécanique 1, par exemple lors de la mise en tension de l'ancrage, ou
- la seconde ligne offshore L2 comportant le second module 3 du dispositif de connexion mécanique 1, dans l'état désassemblé, par exemple lorsque l'ancrage est finalisé ([Fig.8]).

Les moyens de blocage en translation C23, en position active, sont avantageusement structurés pour bloquer en translation l'organe de manœuvre 6 dans le sens amont vers aval et pour participer à la manœuvre en translation de cet organe de manœuvre 6 depuis la position initiale jusqu'à sa position finale (de l'aval vers l'amont).

Encore de manière générale, le second module 3 du dispositif de connexion mécanique 1 est avantageusement bloqué en translation, de l'amont vers l'aval, par l'appui de son organe de manœuvre 6 (et en particulier de sa surface annulaire aval 62) sur les moyens de blocage en translation C23 (tout en autorisant avantageusement une translation du corps tubulaire 35).

En d'autres termes, les moyens de blocage en translation C23 définissent avantageusement un passage dont le diamètre est :
- inférieur au diamètre de l'organe de manœuvre 6, et
- supérieur au diamètre de la surface cylindrique extérieure 352.

En plus de libérer le premier module 2, cette solution technique a l'intérêt de permettre une insertion et un blocage de la seconde ligne offshore L2 au sein du chaumard C, sans nécessiter une orientation particulière de cette seconde ligne offshore L2 (en particulier lorsqu'elle consiste en une chaîne).

### Procédé pour l'ancrage d'une structure flottante S

La présente invention concerne encore le procédé pour l'ancrage d'une structure flottante S au moyen du couple de lignes offshore L qui sont reliées par le dispositif de connexion mécanique 1 selon l'invention.

Le procédé comprend pour cela :
- une étape de préparation consistant à relier les lignes offshore L,
- une étape de traction sur la première ligne offshore L1 du couple de lignes offshore L au travers du chaumard C, dans un sens aval vers amont, jusqu'au passage du dispositif de connexion mécanique 1 en amont des moyens de blocage en translation C23 (figures 1 et 6),
- une étape de relâchement du couple de lignes offshore L, dans laquelle les moyens de blocage en translation C23 bloquent l'organe de manœuvre 6 (dans le sens amont vers aval) et provoquent une manœuvre de l'organe de manœuvre 6 depuis la position initiale jusqu'à la position finale (de l'aval vers l'amont), conduisant à une configuration déverrouillée des moyens de verrouillage 5 (figures 6 et 7),
- une nouvelle étape de traction sur la première ligne offshore L1 pour sa récupération, le second module 3 restant maintenu au sein du chaumard C par les moyens de blocage en translation C23 (figures 7 et 8).

En pratique, l'étape de préparation s'effectue par exemple à l'aide d'un bateau d'installation qui récupère, d'une part, la ligne d'ancrage L2 (venant de l'ancre déjà posée au fond) et, d'autre part, la ligne messager L1 envoyée depuis la structure flottante S ; la connexion des deux lignes offshore L est alors avantageusement mise en œuvre sur le pont du bateau d'installation.

Par ailleurs, pour contrôler le passage du dispositif de connexion mécanique 1 en amont des moyens de blocage en translation C23, la seconde ligne offshore L2 est avantageusement équipée d'un disque cible L5 (ou « target washer ») qui est destiné à venir prendre appui sur les moyens de guidage C22.

Lors de l'étape de relâchement, les moyens de blocage en translation C23 bloquent en translation l'organe de manœuvre 6 tout en autorisant un déplacement relatif du corps tubulaire 35 (de l'amont vers l'aval) lié à l'effort de traction exercé par la masse du seconde ligne offshore L2.

Ce mouvement relatif permet ainsi le déplacement de l'organe de manœuvre 6 depuis la position initiale jusqu'à la position finale.

Les moyens de maintien déformable 7 sont alors avantageusement structurés pour être déformés par l'effort de traction exercé par la seconde ligne offshore L2 sur le corps tubulaire 35 (avantageusement sous l'effet de son propre poids).

De manière générale, en l'espèce, lorsque l'organe de manœuvre 6 atteint sa position finale, une réservation 65 de l'organe de manœuvre 6 vient en regard d'un conduit radial 51.

Cette réservation 65 autorise ici un déplacement radial de l'organe de verrouillage 52 au sein du conduit radial 51, depuis une position intérieure épousant la réservation 23 du premier module 2 ([Fig.2]) jusqu'à une position extérieur libérant cette réservation 23 du premier module 2 ([Fig.7]).

Le premier module 2 et sa première ligne offshore L1 associée sont ainsi libérés par rapport au second module 3.

En opération, la charge d'amarrage est ainsi avantageusement transmise de la seconde ligne offshore L2 vers le chaumard C, via le second module 3 du dispositif de connexion 1.

Par ailleurs, le dispositif de connexion 1 selon l'invention autorise également une nouvelle manœuvre de la seconde ligne offshore L2, par exemple et sans être limitatif pour remplacer une ligne d'ancrage, pour « désancrer » la structure flottante S et son équipement (par exemple une turbine) et les ramener à quai pour les maintenances non opérables en mer.

Le procédé comprend pour cela :
- une étape de raccordement d'un nouvelle première ligne offshore L1 avec la seconde ligne offshore L2, par la connexion temporaire du troisième module 8 avec le second module 3 en attente au sein du chaumard C ([Fig.9]),
- une étape de traction sur la première ligne offshore L1 du couple de lignes offshore L au travers du chaumard C, dans un sens aval vers amont, pour l'ouverture des moyens de blocage en translation C23, puis
- une étape de relâchement du couple de lignes offshore L, dans laquelle les moyens de blocage en translation C23 sont verrouillés en position ouverte et le dispositif de connexion 1 (formé par le couple troisième module 8 / second module 3) est extrait du chaumard C, vers l'aval ([Fig.10]).

Bien entendu, diverses autres modifications peuvent être apportées à l'invention dans le cadre des revendications annexées.

## Revendications

1. Structure flottante (S) comprenant un chaumard (C) muni de moyens de blocage en translation (C23) d'une ligne d'ancrage (L2) dans un sens amont vers aval lequel chaumard (C) est associé à :
- un couple de lignes offshore (L), dont les extrémités libres (L11, L21) sont assemblées par un dispositif de connexion mécanique (1),
lesquelles lignes offshore (L) sont choisies avantageusement parmi une chaine ou un câble, ou
- la ligne d'ancrage (L2) comportant un second module (3) dudit dispositif de connexion mécanique (1), dans l'état désassemblé,
lequel dispositif de connexion mécanique (1), conçu pour la connexion mécanique amovible des extrémités libres (L11, L21) de deux lignes offshore (L), avantageusement la ligne d'ancrage et une ligne messager, comprend deux modules (2, 3) :
- un premier module (2), amont, comportant des moyens d'attache (21) avec une extrémité libre (L11) d'une première ligne offshore (L1), avantageusement la ligne messager, et
- le second module (3), aval, comportant des moyens d'attache (31) avec une extrémité libre (L21) d'une seconde ligne offshore (L2), avantageusement la ligne d'ancrage, lesquels modules (2, 3) sont conformés pour une manœuvre relative entre deux états :
- un état assemblé, dans lequel les modules (2, 3) sont assemblés et définissent un axe longitudinal (1'), avec ledit premier module (2) définissant une extrémité amont (1a) et ledit second module (3) définissant une extrémité aval (1b), et
- un état désassemblé, dans lequel les modules (2, 3) sont séparés l'un par rapport à l'autre,
lequel dispositif de connexion mécanique (1) comprend des moyens de verrouillage (5) qui présentent deux configurations :
- une configuration verrouillée, dans laquelle les modules (2, 3) sont verrouillés dans ledit état assemblé, et
- une configuration déverrouillée, dans laquelle les modules (2, 3) sont manœuvrables entre ledit état assemblé et ledit état désassemblé, et **caractérisée en ce que** lesquels moyens de verrouillage (5) comportent un organe de manœuvre (6), pour manœuvrer les moyens de verrouillage (5) depuis la configuration verrouillée jusqu'à la configuration déverrouillée,
lequel organe de manœuvre (6) est mobile entre deux positions selon un degré de liberté en translation (T) parallèle à l'axe longitudinal (1') des modules (2, 3) en état assemblé, de préférence dans un sens aval vers amont, à savoir :
- une position initiale, de préférence du côté de ladite extrémité aval (1b), dans laquelle les moyens de verrouillage (5) sont dans la configuration verrouillée, et
- une position finale, de préférence du côté de l'extrémité amont (1a), dans laquelle les moyens de verrouillage (5) sont dans la configuration déverrouillée,
et dans laquelle les moyens de blocage en translation (C23), en position active, sont aptes à bloquer en translation l'organe de manœuvre (6) dans le sens amont vers aval et, le cas échéant, à générer une manœuvre en translation de l'organe de manœuvre (6) depuis la position initiale jusqu'à sa position finale.

2. Structure flottante, selon la revendication 1, **caractérisée en ce que** le second module (3) comprend un corps tubulaire (35) comportant deux surfaces cylindriques :
- une surface cylindrique intérieure (351) définissant un logement (353) adapté à recevoir le premier module (2) dans l'état assemblé, et
- une surface cylindrique extérieure (352) le long de laquelle l'organe de manœuvre (6) est guidé selon ledit degré de liberté en translation (T).

3. Structure flottante, selon la revendication 2, **caractérisée en ce que** l'organe de manœuvre (6) consiste en une bague (6) comportant :
- une surface cylindrique intérieure (61), épousant la surface cylindrique extérieure (352) du corps tubulaire (35) pour le guidage en translation, et
- une surface annulaire aval (62), avantageusement tronconique, constituant avantageusement une surface d'appui, notamment pour le déplacement depuis la position initiale jusqu'à la position finale et pour l'appui sur des moyens de blocage en translation (C23) d'un chaumard (C).

4. Structure flottante, selon l'une quelconque des revendications 2 ou 3, **caractérisée en ce que** les moyens de verrouillage (5) comprennent :d'une part, sur le second module (3) :
- au moins un conduit radial (51), ménagé traversant dans le corps tubulaire (35),
- un organe de verrouillage (52), par exemple au moins une bille, rapporté libre en translation dans ledit au moins un conduit radial (51) pour définir les configurations verrouillée / déverrouillée,
- ledit organe de manœuvre (6) comportant une réservation (65) destiné à recevoir l'organe de verrouillage (52) dans la configuration déverrouillée,
d'autre part, sur le premier module (2), au moins une réservation (23) destinée à recevoir l'organe de verrouillage (52) dans la configuration verrouillée.

5. Structure flottante, selon l'une quelconque des revendications 2 à 4, **caractérisée en ce que** le premier module (2) comporte un corps tubulaire (35) définissant deux surfaces :
- une surface cylindrique intérieure (351) destinée à recevoir l'extrémité libre (L11) de la première ligne offshore (L1), et
- une surface cylindrique extérieure (352) épousant, au jeu près, le logement (353) du second module (3).

6. Structure flottante, selon l'une quelconque des revendications 1 à 5, **caractérisée en ce que** l'organe de manœuvre (6) coopère avec des moyens de maintien déformable (7), destinés à tendre à maintenir ledit organe de manœuvre (6) en position initiale et à être déformés pour générer le déplacement depuis la position initiale jusqu'à la position finale.

7. Structure flottante, selon la revendication 6 en combinaison avec la revendication 2, **caractérisée en ce que** le corps tubulaire (35) comporte une collerette (355) qui est raccordée à la surface cylindrique extérieure (352), à distance des moyens d'attache (31),
lesquels moyens de maintien déformable (7) sont implantés entre ladite collerette (355) et l'organe de manœuvre (6).

8. Structure flottante, selon l'une quelconque des revendications 1 à 7, **caractérisée en ce que** le dispositif de connexion mécanique (1) comprend un troisième module (8) comportant des moyens d'attache (81) avec une extrémité libre (L11) de la première ligne offshore (L1),
et **en ce que** le troisième module (8) et le second module (3) comportent des moyens de solidarisation amovible additionnels (9) qui sont adaptés à leur connexion mécanique temporaire après désassemblage du premier module (2) et du second module (3).

9. Structure flottante, selon l'une quelconque des revendications 1 à 8, **caractérisée en ce que**, dans l'état assemblé, les modules (2, 3) sont encore reliés par un organe de liaison dégradable (10) qui est destiné à être rompu lors du passage d'un état assemblé à un état désassemblé.

10. Procédé pour l'ancrage d'une structure flottante (S) selon l'une quelconque des revendications 1 à 9,
lequel procédé comprend :
- une étape de traction sur la première ligne offshore (L1) d'un couple de lignes offshore (L) au travers d'un chaumard (C), dans un sens aval vers amont, jusqu'au passage du dispositif de connexion mécanique (1) en amont des moyens de blocage en translation (C23),
- une étape de relâchement dudit couple de lignes offshore (L), dans laquelle les moyens de blocage en translation (C23) bloquent l'organe de manœuvre (6) et provoquent une manœuvre dudit organe de manœuvre (6) depuis la position initiale jusqu'à la position finale, conduisant à une configuration déverrouillée des moyens de verrouillage (5),
- une nouvelle étape de traction sur la première ligne offshore (L1) pour sa récupération, le second module (3) étant maintenu au sein du chaumard (C) par lesdits moyens de blocage en translation (C23).

## Patentansprüche

1. Schwimmende Struktur (S) mit einer Klüse (C), die mit Mitteln (C23) zum Blockieren einer Ankerlinie (L2) in Längsrichtung von stromaufwärts nach stromabwärts versehen ist, wobei die Klüse (C)
- einem Paar Offshore-Linien (L) zugeordnet ist, deren freie Enden (L11, L21) mittels einer mechanischen Verbindungsvorrichtung (1) zusammengebaut sind, wobei die Offshore-Linien (L) vorteilhafterweise aus einer Kette oder einem Seil ausgewählt sind, oder
- die Ankerlinie (L2) in nicht zusammengebautem Zustand ein zweites Modul (3) der mechanischen Verbindungsvorrichtung (1) aufweist,
wobei die mechanische Verbindungsvorrichtung (1), die für die abnehmbare mechanische Verbindung der freien Enden (L11, L21) zweier Offshore-Linien (L), vorteilhafterweise der Ankerlinie und einer Meldelinie, ausgelegt ist, zwei Module (2, 3) aufweist:
- ein erstes, stromaufwärtiges Modul (2), das Mittel (21) zum Befestigen an einem freien Ende (L11) einer ersten Offshore-Linie (L1), vorteilhafterweise der Meldelinie, und
- das zweite, stromabwärtige Modul (3), das Mittel (31) zum Befestigen an einem freien Ende (L21) einer zweiten Offshore-Linie (L2), vorteilhafterweise der Ankerlinie, aufweist,
wobei die Module (2, 3) für ein relatives Manöver zwischen zwei Zuständen ausgelegt sind:
- einem zusammengebauten Zustand, bei dem die Module (2, 3) zusammengebaut sind und eine Längsachse (1') definieren, wobei das erste Modul (2) ein stromaufwärtiges Ende (1a) und das zweite Modul (3) ein stromabwärtiges Ende (1b) definieren, und
- einem zerlegten Zustand, bei dem die Module (2, 3) voneinander getrennt sind, wobei die mechanische Verbindungsvorrichtung (1) Verriegelungsmittel (5) aufweist, die zwei Konfigurationen haben:
- eine verriegelte Konfiguration, bei der die Module (2, 3) im zusammengebauten Zustand verriegelt sind, und
- eine entriegelte Konfiguration, bei der die Module (2, 3) zwischen dem zusammengebauten Zustand und dem zerlegten Zustand veränderbar sind, und **dadurch gekennzeichnet, daß**
die Verriegelungsmittel (5) ein Betätigungsorgan (6) aufweisen, um die Verriegelungsmittel (5) von der verriegelten Konfiguration zur entriegelten Konfiguration zu verändern,
wobei das Betätigungsorgan (6) gemäß einem translatorischen Freiheitsgrad (T) parallel zur Längsachse (1') der Module (2, 3) in zusammengebautem Zustand, vorzugsweise in einer Richtung von stromabwärts nach stromaufwärts, zwischen zwei Positionen bewegbar ist, und zwar:
- einer Anfangsposition, vorzugsweise auf der Seite des stromabwärtigen Endes (1b), in der die Verriegelungsmittel (5) in verriegelter Konfiguration sind, und
- einer Endposition, vorzugsweise auf der Seite des stromaufwärtigen Endes (1a), in der die Verriegelungsmittel (5) in entriegelter Konfiguration sind,
und wobei die Durchgangsverhinderungsmittel (C23) in aktiver Position in der Lage sind, das Betätigungsorgan (6) in der Richtung von stromaufwärts nach stromabwärts durchgangsmäßig zu blockieren und gegebenenfalls eine Durchgangsbewegung des Betätigungsorgans (6) von der Ausgangsposition zu seiner Endposition zu erzeugen.

2. Schwimmende Struktur gemäß Anspruch 1, **dadurch gekennzeichnet, daß** das zweite Modul (3) einen rohrförmigen Körper (35) mit zwei zylindrischen Oberflächen aufweist:
- einer inneren zylindrischen Oberfläche (351), die eine Unterbringung (353) definiert, die geeignet ist, das erste Modul (2) in zusammengebautem Zustand aufzunehmen, und
- einer äußeren zylindrischen Oberfläche (352), entlang derer das Betätigungsorgan (6) gemäß dem translatorischen Freiheitsgrad (T) geführt wird.

3. Schwimmende Struktur gemäß Anspruch 2, **dadurch gekennzeichnet, daß** das Betätigungsorgan (6) aus einem Ring (6) besteht, der
- eine innere zylindrische Oberfläche (61), die an der äußeren zylindrischen Oberfläche (352) des rohrförmigen Körpers (35) zur Translationsführung anliegt, und
- eine stromabwärtige, vorzugsweise kegelstumpfartige Oberfläche (62), die vorteilhafterweise eine Auflageoberfläche, insbesondere für eine Verlagerung von der Ausgangsposition zur Endposition und für die Auflage einer Klüse (C) auf Durchgangsverhinderungsmitteln (C23) darstellt,
aufweist.

4. Schwimmende Struktur gemäß einem der Ansprüche 2 oder 3, **dadurch gekennzeichnet, daß** die Verriegelungsmittel (5)
einerseits auf dem zweiten Modul (3)
- mindestens eine im rohrförmigen Körper (35) durchgehend angelegte radiale Leitung (51),
- ein Verriegelungsorgan (52), zum Beispiel mindestens eine zum Definieren der verriegelten/entriegelten Konfiguration translatorisch frei in die mindestens eine radiale Leitung (51) eingesetzte Kugel,
- wobei das Betätigungsorgan (6) eine Einbuchtung (65), die dazu bestimmt ist, das Verriegelungsorgan (52) in der entriegelten Konfiguration aufzunehmen,
andererseits auf dem ersten Modul (2) mindestens eine Einbuchtung (23), die dazu bestimmt ist, das Verriegelungsorgan (52) in der verriegelten Konfiguration aufzunehmen,
aufweisen.

5. Schwimmende Struktur gemäß einem der Ansprüche 2 bis 4, **dadurch gekennzeichnet, daß** das erste Modul (2) einen rohrförmigen Körper (35) aufweist, der zwei Oberflächen definiert:
- eine innere zylindrische Oberfläche (351), die dazu bestimmt ist, das freie Ende (L11) der ersten Offshore-Linie (L1) aufzunehmen, und
- eine äußere zylindrische Oberfläche (352), die, vom Spiel abgesehen, am Unterbringungsort (353) des zweiten Moduls (3) anliegt.

6. Schwimmende Struktur gemäß einem der Ansprüche 1 bis 5, **dadurch gekennzeichnet, daß** das Betätigungsorgan (6) mit verformbaren Haltemitteln (7) zusammenwirkt, die dazu bestimmt sind, zu versuchen, das Betätigungsorgan (6) in der Anfangsposition zu halten und verformt zu werden, um die Verlagerung von der Anfangsposition zur Endposition zu erzeugen.

7. Schwimmende Struktur gemäß Anspruch 6 in Kombination mit Anspruch 2, **dadurch gekennzeichnet, daß** der rohrförmige Körper (35) einen Kragen (355) aufweist, der in einem Abstand von den Befestigungsmitteln (31) mit der äußeren zylindrischen Oberfläche (352) verbunden ist, wobei die verformbaren Haltemittel (7) zwischen dem Kragen (355) und dem Betätigungsorgan (7) eingefügt sind.

8. Schwimmende Struktur gemäß einem der Ansprüche 1 bis 7, **dadurch gekennzeichnet, daß** die mechanische Verbindungsvorrichtung (1) ein drittes Modul (8) aufweist, das Mittel (81) zum Befestigen mit einem freien Ende (L11) der ersten Offshore-Linie (L1) aufweist,
und daß das dritte Modul (8) und das zweite Modul (3) zusätzliche abnehmbare Befestigungsmittel (9) aufweisen, die für deren zeitweise mechanische Verbindung nach Abbau des ersten Modules (2) und des zweiten Moduls (3) ausgelegt sind.

9. Schwimmende Struktur gemäß einem der Ansprüche 1 bis 8, **dadurch gekennzeichnet, daß** die Module (2, 3) im zusammengebauten Zustand noch durch ein zersetzbares Verbindungsorgan (10) verbunden sind, das dazu bestimmt ist, beim Übergang von einem zusammengebauten Zustand zu einem auseinandergenommenen Zustand zerrissen zu werden.

10. Verfahren zum Verankern einer schwimmenden Struktur gemäß einem der Ansprüche 1 bis 9,
wobei das Verfahren
- einen Schritt des Ziehens an der ersten Offshore-Linie (L1) eines Paars Offshore-Linien (L) durch eine Klüse (C) in einer Richtung von stromabwärts nach stromaufwärts bis zur mechanischen Verbindungsvorrichtung (1) stromaufwärts der Durchgangsverhinderungsmittel (C23),
- einen Schritt des Loslassens des Offshore-Linienpaars (L), bei dem die Durchgangsverhinderungsmittel (C23) das Betätigungsorgan (6) blockieren und eine Betätigung des Betätigungsorgans (6) von der Ausgangsposition bis zur Endposition verursachen, die zu einer entriegelten Konfiguration der Verriegelungsmittel (5) führt,
- einen erneuten Schritt des Ziehens an der ersten Offshore-Linie (L1) für deren Zurückholen, wobei das zweite Modul (3) durch die Durchgangsverhinderungsmittel (C23) in der Klüse (C) gehalten wird,
aufweist.

## Claims

1. A floating structure (S) comprising a fairlead (C) provided with blocking means (C23) for blocking a mooring line (L2) in translation in an upstream to downstream direction,
said fairlead (C) being associated with:
- a couple of offshore lines (L) whose free ends (L11, L21) are assembled by a mechanical connection device (1), said offshore lines (L) being advantageously chosen among a chain or a cable,
- a mooring line (L2) comprising the second module (3) of the mechanical connection device (1), in the disassembled state,
the mechanical connection device designed for the detachable mechanical connection of the free ends (L11, L21) of two offshore lines (L), advantageously the mooring line and a messenger line, comprising two modules (2, 3):
- a first module (2), upstream, comprising attachment means (21) for attachment to a free end (L11) of a first offshore line (L1), advantageously the messenger line, and
- a second module (3), downstream, comprising attachment means (31) for attachment to a free end (L21) of a second offshore line (L2), advantageously the mooring line, said modules (2, 3) being designed for relative movement between two states:
- an assembled state, in which the modules (2, 3) are assembled and define a longitudinal axis (1'), with said first module (2) defining an upstream end (1a) and said second module (3) defining a downstream end (1b), and
- a disassembled state, in which the modules (2, 3) are separated from each other,
said mechanical connection device (1) comprises locking means (5) that have two configurations:
- a locked configuration, in which the modules (2, 3) are locked in said assembled state, and
- an unlocked configuration, in which the modules (2, 3) are operable between said assembled state and said disassembled state, and **characterized in that** said locking means (5) comprising an operating member (6), to operate the locking means (5) from the locked configuration to the unlocked configuration,
wherein the operating member (6) is movable between two positions according to a translational degree of freedom (T) parallel to the longitudinal axis (1') of the modules (2, 3) in the assembled state, preferably from the downstream to the upstream, i.e.:
- an initial position, preferably on the side of said downstream end (1b), in which the locking means (5) are in the locked configuration, and
- a final position, preferably on the side of the upstream end (1a), in which the locking means (5) are in the unlocked configuration,
wherein the translation blocking means (C23), in active position, are capable of blocking the operating member (6) in translation in the upstream to downstream direction and, as the case may be, generating a translational operation of the operating member (6) from the initial position to the final position.

2. The floating structure according to claim 1, **characterized in that** the second module (3) comprises a tubular body (35) comprising two cylindrical surfaces:
- an inner cylindrical surface (351) defining a housing (353) adapted to receive the first module (2) in the assembled state, and
- an outer cylindrical surface (352) along which the operating member (6) is guided with said translational degree of freedom (T).

3. The floating structure according to claim 2, **characterized in that** the operating member (6) consists of a ring (6) having:
- an inner cylindrical surface (61), conforming the outer cylindrical surface (352) of the tubular body (35) for translation guiding, and
- a downstream annular surface (62), advantageously frustoconical, advantageously forming a bearing surface, in particular for moving from the initial position to the final position and for bearing on translation blocking means (C23) of a fairlead (C).

4. The floating structure according to any one of claims 2 or 3, **characterized in that** the locking means (5) comprise:
on the one hand, on the second module (3):
- at least one radial duct (51), running through the tubular body (35),
- a locking member (52), for example a ball, added free in translation into said at least one radial duct (51) to define the locked / unlocked configurations,
- said operating member (6) comprising a recess (65) intended to receive the locking member (52) in the unlocked configuration,
on the other hand, on the first module (2), at least one recess (23) intended to receive the locking member (52) in the locked configuration.

5. The floating structure according to any one of claims 2 to 4, **characterized in that** the first module (2) comprises a tubular body (35) defining two surfaces:
- an inner cylindrical surface (351) intended to receive the free end (L11) of the first offshore line (L1), and
- an outer cylindrical surface (352) conforming, with a clearance, the housing (353) of the second module (3).

6. The floating structure according to any one of claims 1 to 5, **characterized in that** the operating member (6) cooperates with deformable holding means (7), intended to tend to hold said operating member (6) in initial position and to be deformed to generate the movement from the initial position to the final position.

7. The floating structure according to claim 6 in combination with claim 2, **characterized in that** the tubular body (35) has a flange (355) that is connected to the outer cylindrical surface (352), remote from the attachment means (31), said deformable holding means (7) being arranged between said flange (355) and the operating member (6).

8. The floating structure according to any one of claims 1 to 7, **characterized in that** the mechanical connection device (1) comprises a third module (8) comprising attachment means (81) for attachment to a free end (L11) of the first offshore line (L1),
and **in that** the third module (8) and the second module (3) comprise additional detachable securing means (9) that are adapted for their temporary mechanical connection after disassembly of the first module (2) and the second module (3).

9. The floating structure according to any one of claims 1 to 8, **characterized in that**, in the assembled state, the modules (2, 3) are also linked by a degradable link member (10) that is intended to be broken upon passage from an assembled state to a disassembled state.

10. A method for anchoring a floating structure (S) according to any of the claims 1 to 9,
said method comprising:
- a step of pulling on the first offshore line (L1) of a couple of offshore lines (L) through a fairlead (C), in a downstream to upstream direction, until the mechanical connection device (1) goes upstream from the translation blocking means (C23),
- a step of releasing said couple of offshore lines (L), in which the translation blocking means (C23) block the operating member (6) and cause said operating member (6) to move from the initial position to the final position, leading to an unlocked configuration of the locking means (5),
- a new step of pulling on the first offshore line (L1) for the recovery thereof, the second module (3) being held within the fairlead (C) by said translation blocking means (C23).
